# EUROPEAN PATENT SPECIFICATION

(11) **EP 0 635 345 B1**
(45) Date of publication and mention of the grant of the patent: **14.04.1999**
(21) Application number: 93830305.4
(22) Date of filing: 19.07.1993
(51) Int. Cl.: B29B 17/00, B29K 25/00

(54) **System for compacting expanded polystyrene**
Verfahren zur Verdichtung von Polystyrol-Schaumstoff
Procédé pour densifier de la mousse polystyrène

(43) Date of publication of application: 25.01.1995
(73) Proprietor: COMAV S.r.l., I-44040 Dosso di Sant'Agostino, Ferrara (IT)
(72) Inventor: Ercolani, Paolo, I-40024 Castel San Pietro Terme, Bologna (IT)
(74) Representative: Coppi, Cecilia

(56) References cited:
- EP-A- 0 357 880
- DE-A- 3 214 907
- DE-A- 4 103 932
- DE-U- 9 109 781
- US-A- 5 129 588
- PATENT ABSTRACTS OF JAPAN vol. 13, no. 477 (M-885)(3825) 27 October 1989 & JP-A-01 188 310 (MORUTON K.K.) 27 July 1989
- PATENT ABSTRACTS OF JAPAN vol. 14, no. 19 (M-919)(3962) 16 January 1990 & JP-A-01 262 105 (SUMITOMO METAL IND. LTD.) 19 October 1989
- PATENT ABSTRACTS OF JAPAN vol. 13, no. 465 (M-882)(3813) 20 October 1989 & JP-A-01 182 012 (MIIKE TEKKOSHO K.K.) 19 July 1989
- JAPANESE PATENTS ABSTRACTS (UNEXAMINED) Section Ch, Week 9318, 23 June 1993 Derwent Publications Ltd., London, GB; Class A, Page 5, AN 93-148723/18 & JP-A-05 084 743 (SEKISUI PLASTICS CO. LTD. AND MEINO K.K.) 6 April 1993

## Description

This invention refers to an apparatus for compacting material like expanded polystyrene, reducing protective product packaging waste to a compact and homogeneous mass which is easy to manage and store, for later utilisation and recovery.

It is known that expanded polystyrene is widely used to make protective packing for many household appliances and products, because of the ease with which shaped and sectional pieces can be made and because of the considerable lightness of the product and its ability to absorb knocks.

Also well known is the difficulty of eliminating used packaging or scrap because of their bulkiness and the need to crush them in order to reduce their volume. There exist relatively complex machines for large sizes and bulks, both purpose-built, but not for compressing waste polystyrene material as a non-exclusive and non-specialized function of their specific activity.

The difficulty of compressing consists in not heating the material so as to prevent its liquefying; this is hard to avoid when traditional presses or machines not designed and built for this specific purpose are employed.

DE-A-3214907 discloses a complex installation for compacting expanded polystyrene in which the apparatus utilizes a steam introduction for heating the material and several steps of cutting of the compacted products.

The aim of this invention is to permit the construction of a apparatus based on an extremely simple machine of limited dimension which quickly and efficiently transforms the shapeless material into an extremely compact bar with a square or similar cross-section which is easy to transport and stow by virtue of its minimal storage bulk.

The direct and indirect advantages of the system after treatment are: the much reduced volume (approximately 1/40th) of the material and the very high hourly productivity, reduced complexity and size, ease of movement and enhanced performance compared with other traditional crushing solutions.

Another aim of this invention is to develop an ecologically viable system for the recovery of used material, like expanded polystyrene, with minimum costs and space problems connected with the accumulation of waste material. These and other aims that will be detailed below are all achieved by the apparatus forming the object of this invention which provides a complete cycle for the transformation of protective packaging or other disposable scrap into a homogeneous and pressed bar which is easy to transport and store in a very small space compared with the material prior to treatment.

In its basic configuration the machine consists of a loading hopper which receives the polystyrene parts, two counter-rotating bars beneath them fitted with bent radial rods designed to crush the packaging, and a longitudinal screw to convey the crushed product to a second transverse cone-shaped screw with variable pitch and diameter for introduction into the compression cylinder with shaped head piston and alternating motion.

Other aims and advantages will become clear from the description that follows and the attached drawings which illustrate, in schematic form and by way of example, one way in which the invention can be realized.

With reference to these drawings:
FIG. 1 shows one view of the machine
FIG. 2 shows a layout view of the machine
FIG. 3 shows a side view of the machine on the bar outlet side
FIG. 4 shows the machine's hydraulic system diagram.

The expanded polystyrene or other similar material is introduced loose into the loading hopper 13.

In the crushing chamber 3 the material meets two counter-rotating bars 11 and 12, which are operated by means of an appropriate transmission taken from the axis of a longitudinal screw feeder 8 arranged at the bottom of the crushing unit.

The transverse rods of these bars, radially arranged and distanced and turning with the suitably shaped and bent counter-rotating bars, proceed to crush the material.

From the bottom of the crushing unit the longitudinal screw feeder 8 conveys the crushed material along a second transverse screw 5 driven by an hydraulic motor 7 with mechanical transmission.

Specifically, this second screw which feeds the compression chamber with the material is cone-shaped and has a variable pitch and diameter so as to facilitate the conveying and precompression of the crushed material.

Lastly, the crushed product reaches the pressure cylinder 6 in which a piston, hydraulically operated by oil under pressure, performs an alternating motion, synchronized with the movement of the screw 5, and thus a repeated pressing and compacting action in the compression chamber 1.

The front section of the hydraulic piston has a specially shaped head (cone or pyramid) to permit and facilitate the expulsion of air during compacting.

A jaw-based system (not shown) at the outlet end of the chamber 1 clamps the compacted bar in order to provide the alternating braking reaction to the sliding in the chamber during the repeated compression stages. This chamber is shaped so as to retain the product for as long as is needed to remove the air or gas contained in it.

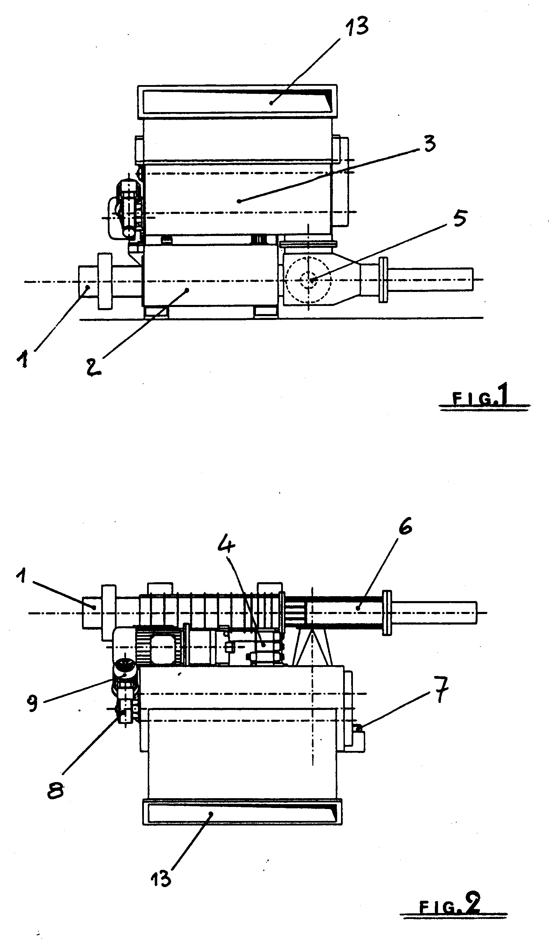

At the bar outlet on the left-hand side of the machine (FIG. 1) the bar can be cut into blocks of appropriate length and sent on to the collecting area.

Appropriate optional units can be added to the machine for collection and cutting, as well as for conveying the compacted material leaving the machine itself.

The whole apparatus is completed by a main electrical motor 10 which drives the main pump, and by the services consisting of the bank of hydraulic control valves on the plate 4, the hydraulic motor 7, the pressure cylinder, the electrical motor 9 with reduction gear for driving the corresponding axis of the first, longitudinal screw and the axes of the crushing bars, and by the hydraulic system oil tank 2 with its service accessories 18, 19.

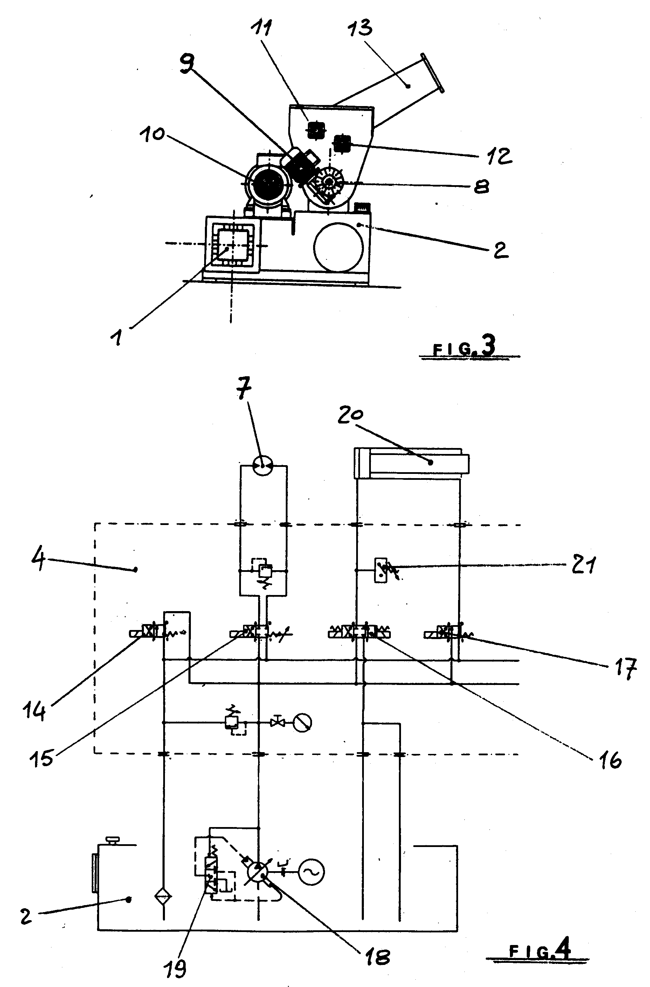

FIG. 4 shows the hydraulic system diagram and the connection of the devices required for machine operation.

The circuit, starting from the tank 2 with the piston pump 18, sends the oil under pressure to the control valves and the devices on the plate 4 which bears them.

Specifically, the control valve 15 operates the hydraulic motor 7 to drive the transverse feeder screw 5, while the control valves 16 and 17 operate the double-acting piston 20 which moves inside the pressure cylinder 6.

The combination of the electrical signals given by the devices 21 and 14 permits the stopping and synchronization in sequence of the alternating movements of the piston 20 in the cylinder 6 with the motion of the feeder screw 5.

This invention achieves its stated aims and, specifically, it permits the continuous pressing of expanded polystyrene into homogeneous and uniform shapes which are extremely easy to store thanks to the greatly reduced bulk and compactness of the material.

This invention, as illustrated and described in schematic form and by way of example, may be extended to all those accessory variations which, as such, fall within its scope as defined in the appended claims. For example, the loading and unloading operations may be performed by the introduction of automatic loading and unloading devices, the feeding of the compacting piston may be achieved by means of another hydraulic piston, and one or more machines may be introduce in a continuous line for the recovery and treatment of expanded polystyrene and similar material in scrap form.

## Claims

1. APPARATUS FOR COMPACTING EXPANDED POLYSTYRENE AND SIMILAR MATERIAL, which comprises a complex machine comprising crushing means for the preliminary crushing of the polystyrene scrap, and comprising screw feeders to convey said crushed polystyrene scrap mechanically to a pressure cylinder (6) in which a moving piston with a suitably shaped head transforms the loose scrap, by repeated alternating motion, into a compact mass of homogeneous rectangular shape.

2. APPARATUS, as described in claim 1, characterized by the fact that the crushing means are consisting of two counter-rotating bars (11 and 12) arranged beneath the loading hopper and fitted with shaped and bent radial elements for crushing the polystyrene into small pieces or scrap.

3. APPARATUS, as described in claim 2, characterized by the fact that a longitudinal screw feeder (8) is arranged in parallel relationship with the counter-rotating crushing bars at the bottom of the chamber in which said bars operate; the said feeder conveying the finely crushed product axially to the end of the machine along a second transverse feeder screw (5).

4. APPARATUS, as described in claim 3, characterized by the fact that the said second feeder screw is cone-shaped with a variable pitch and diameter for conveying the crushed product into the compression chamber of a pressure cylinder, in which a double-acting piston, moving backwards and forwards presses and compacts the material in a chamber arranged along the bottom of the machine, said chamber having an outlet end for the issuing of the compacted product.

5. APPARATUS, as described in the preceding claims, characterized by means for making the rotation of the transverse screw and the alternating motion of the piston synchronized and sequential to ensure regular pressing.

6. APPARATUS, as described in the preceding claims, characterized by the fact that the head of the compression piston is shaped so as to facilitate the expulsion of air during pressing and thus obtain a perfectly homogeneous and compact product.

## Patentansprüche

1. APPARATUR ZUR VERDICHTUNG VON POLYSTYRENSCHAUM UND GLEICHARTIGEN MATERIALIEN, umfasst eine komplexe Maschine, die über Zerkleinerungsvorrichtungen zur vorherigen Zerkleinerung von Polystyrenabfällen und über Förderschnecken zur mechanischen Zuführung dieser zerkleinerten Polystyrenabfälle zum Druckzylinder (6) verfügt. Innerhalb dieses Druckzylinders transformiert ein beweglicher Kolben, dessen Kopf angemessen geformt ist, durch wiederholtes Hin- und Herbewegen den losen Abfall in eine kompakte, gleichmäßig rechteckig geformte Masse.

2. APPARATUR gemäß Anspruch 1, gekennzeichnet dadurch, dass die Zerkleinerungsvorrichtung aus zwei unterhalb des Fulltrichters befindlichen, sich gegenläufig drehenden Stäben (11 und 12), die mit radial geformten und gekrümmten Elementen zur Zerkleinerung von Polystyren in kleine Stücke oder Abfall ausgestattet sind, besteht.

3. APPARATUR gemäß Anspruch 2, gekennzeichnet dadurch, dass eine längesverlaufende Förderschnecke (8) parallel zu den sich gegenläufig drehenden Zerkleinerungsstäben am Boden der sie beherbergenden Kammer montiert ist; besagte Förderschnecke fördert das fein zerkleinerte Produkt axial zum Ende der Maschine längs einer zweiten querliegenden Förderschnecke (5).

4. APPARATUR gemäß Anspruch 3, gekennzeichnet dadurch, dass besagte zweite Förderschnecke konisch geformt ist und eine veränderliche Steigung und einen veränderlichen Durchmesser besitzt zur Beförderung des zerkleinerten Produktes in die Verdichtungskammer eines Druckzylinders, in dem sich ein Doppeleffektkolben befindet, der durch seine Hin- und Herbewegung das Material in einer sich am Baden der Maschine befindlichen Kammer komprimiert und verdichtet. Besagte Kammer verfügt an ihrem Ende über einen Auslaß, aus dem das verdichtete Produkt herausgegeben wird.

5. APPARATUR gemäß den Ansprüchen 1-4, gekennzeichnet durch Vorrichtungen, die die Drehung der querliegenden Förderschnecke mit der Hin- und Herbewegung des Kolbens synchronisieren und in der Abfolge bestimmen, um eine gleichmäßige Verdichtung zu gewährleisten.

6. APPARATUR gemäß den Ansprüchen 1-5, gekennzeichnet dadurch, dass der Kopf des Verdichtungskolbens so geformt ist, dass der Luftaustritt während der Verdichtungsphase erleichtert wird und somit ein perfekt gleichmäßiges und verdichtetes Produkt erhalten wird.

## Revendications

1. Dispostif de compactage du polystyrène expansé et de metériaux semblables, comprenant une machine complexe qui présente des moyens broyeurs pour le broyage préliminaire des déchets de polystyrène, et des alimentateurs à vis pour le transport mécanique de ces déchets de polystyrène broyés à un cylindre presseur (6), ou un piston mobile, pourvu d'une tête de forme appropriée, transforme les déchets alimentés en vrac, à travers un mouvement répété de va-et-vient, en masse compacte de forme homogène rectangulaire.

2. Dispositif suivant la revendication 1, caractérisé en ce que les moyens broyeurs se composent de deux barres contrarotatives (11 et 12) disposés au-dessous de la trémie, et pourvues d'éléments radiaux profilés et pliés pour le broyage du polystyrène en petits morceaux ou déchets.

3. Dispositif suivant la revendication 2, caractérisé en ce qu'un alimentateur longitudinal à vis (8) est disposé parallèlement aux barres contrarotatives, du fond de la chambre où ces barres sont prévues; ledit alimentateur transportant le produit finement broyé jusqu'au bout de la machine le long d'un deuxième alimentateur transversal à vis (5).

4. Dispositif suivant la revendication 3, caractérisé en ce que ledit deuxième alimentateur à vis a une forme conique, avec un pas et un diamètre variables pour transporter le produit broyé dans la chambre de compression d'un cylindre presseur, où un piston à double effet, comprime et compacte le matériau, par sa course alternative, dans une chambre disposée le long du fond de la machine, ladite chambre présentant une sortie pour l'émission du produit compacté.

5. Dispositif suivant les revendications précédentes, caractérisé par des moyens servant à rendre la rotation de la vis transversale et le mouvement alterné du piston, sychronisés et séquentiels de façon à assurer une pression régulière.

6. Dispositif suivant les revendications précédentes, caractérisé en ce que la tête du piston presseur a une forme qui permet une plus facile expulsion de l'air pendant la compression, et d'obtenir, par conséquent, un produit parfaitement homogène et compact.
